# EUROPEAN PATENT SPECIFICATION

(11) **EP 3 396 145 B1**
(45) Date of publication and mention of the grant of the patent: **27.05.2020**
(21) Application number: 16894474.2
(22) Date of filing: 22.06.2016
(51) Int. Cl.: F02K 7/10, F02C 7/00, F02C 7/26, F23R 3/20

(54) **JET ENGINE AND FLYING OBJECT**
STRAHLTRIEBWERK UND FLUGKÖRPER
MOTEUR À RÉACTION ET OBJET VOLANT

(30) Priority: 16.03.2016 JP 2016052174
(43) Date of publication of application: 31.10.2018
(73) Proprietor: Mitsubishi Heavy Industries, Ltd., Tokyo 108-8215 (JP)
(72) Inventor: HIROKANE, Mariko, Tokyo 108-8215 (JP); ANDO, Keisuke, Tokyo 108-8215 (JP); UENO, Yoshihiko, Tokyo 108-8215 (JP)
(74) Representative: Henkel & Partner mbB
(86) International application number: PCT/JP2016/068481
(87) International publication number: WO 2017/158856

(56) References cited:
- EP-A1- 0 663 524
- WO-A1-2015/146356
- WO-A1-2015/146357
- WO-A1-2015/146375
- JP-A- H07 238 867
- JP-A- 2012 202 226
- US-A- 4 903 480
- US-A- 5 660 040
- US-A- 5 941 064

## Description

### Technical Field

The present invention relates to a jet engine and a flying object.

### Background Art

As a jet engine for a fuselage flying faster than sound velocity, a turbojet engine (containing a turbofan engine and so on), a ram jet engine, and a scram jet engine are known. These are the jet engines which operate by using introduced air, and especially, the speed of the introduced air depends strongly on the flight speed in the ram jet engine and the scram jet engine.

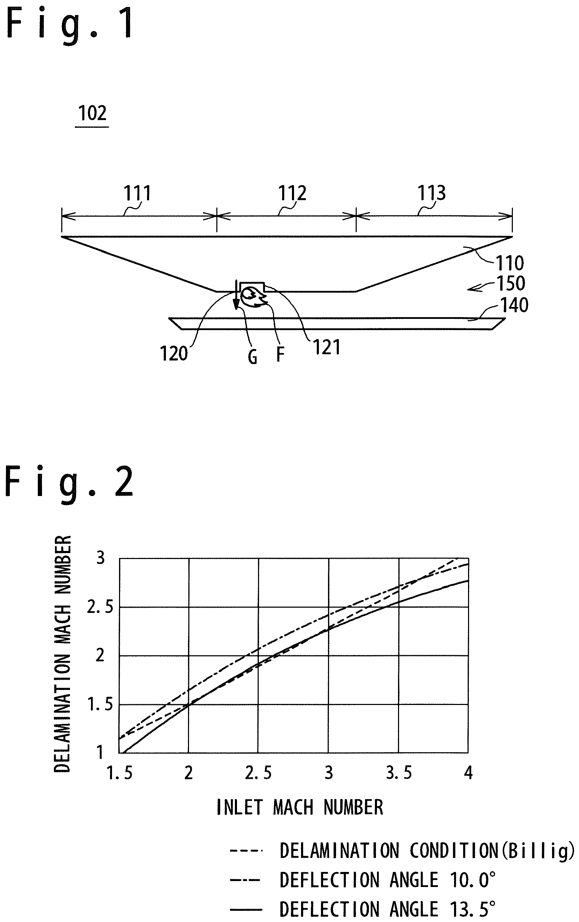

FIG. 1 is a cross sectional view schematically showing the configuration of a jet engine. The jet engine 102 has a fuselage 110 and a cowl 140 provided below the fuselage 110 to form a space 150 through which gas can flow. A part below the front of the fuselage 110 and the front part of the cowl 140 configure an inlet 111 to introduce air into the space 150. A part below the middle of the fuselage 110 and the middle part of the cowl 140 configure a combustor 112 to mix fuel and air and to combust the mixture. A part below the rear of the fuselage 110 and the rear part of the cowl 140 configure a nozzle 113 to expand and expel the combustion gas. The combustor 112 has a fuel injector 120 and a flame stabilizer 121. The fuel injector 120 is provided for a lower part of the fuselage 110 corresponding to the combustor 112. The fuel injector 120 injects the fuel G into the space 150. The flame stabilizer 121 is provided in a rear direction from the fuel injector 120 in the lower part of the fuselage 110 corresponding to the combustor 112. The flame stabilizer 121 maintains flame F for combustion by using the fuel G from the fuel injector 120. The jet engine 102 mixes the air introduced from the inlet 111 and the fuel G injected from the fuel injector 120, combusts the mixture in the combustor 112, expands the combustion gas in the nozzle 113, and expels the combustion gas in a back direction from the fuselage 110. The flame F of the flame stabilizer 121 is used to maintain the combustion.

The maintenance of the flame in the combustor is realized when a response time from time when the fuel is injected in the combustor to time when the fuel is combusted is shorter than a residence time that the fuel stays in the combustor. In the fuselage that flies faster than the velocity of sound, the staying time becomes short because the flow speed of the air in the combustor is fast. To carry out the maintenance of flame stably, there would be a method of making the response time short and another method of making the staying time long. For example, to make the staying time long, it would be considered that the length of the combustor 112 is made long, resulting in a large-scaled fuselage. Therefore, in the jet engine in which the speed of the introduced air is fast, like the scram jet engine, the technique which makes the maintenance of flame in the combustor possible by making the response time short is demanded.

As the related technique, JP 2004-84516 A discloses a boundary layer delamination control device. In the boundary layer delamination control device shown in Patent Literature 1, an acute-angled prominence is provided for an engine inner wall to turn to the rear direction. The boundary layer delamination control is carried out by the prominence.

Also, JP 2012-202226 A discloses a jet engine. It is described in the Background Art of this document that a ramp is provided on the wall surface of a combustor. Also, it is described that the flame is maintained in a downstream direction from the ramp.

Furthermore, a flow field of the fuel injected from the ramp injector is described in the FIG. 1 of "Ramp Injector Scale Effects on Supersonic Combustion", by Adam Trebs and 4 persons, Journal of Propulsion and Power, 2014, Vol. 30, No. 2, pp. 426-437

EP 0 663 524 A1 discloses a scram jet engine for a missile on which the preamble portion of claim 1 is based.

### Summary of the Invention

When a ramp is arranged in a supersonic flow, the relation of Mach number (inlet Mach number) of fluid flowing on the upstream side than the ramp and delamination Mach number when the fluid flowing on the ramped surface of the ramp delaminates from the ramped surface is possible to be acquired by using the equation formulated by Billig. A broken line in FIG. 2 shows a relation (the delamination condition) between the inlet Mach number and the delamination Mach number. It is possible to theoretically acquire the relation of Mach number (inlet Mach number) of the fluid flowing on the upstream side than the ramp, the ramp angle of the ramped surface of the ramp and Mach number of the fluid flowing on the ramped surface of the ramp. A solid line in FIG. 2 shows the relation of inlet Mach number and Mach number of the fluid flowing on the ramped surface of the ramp when the ramp angle of the ramped surface of the ramp is 13.5 degrees. Also, a dash-dotted line in FIG. 2 shows the relation of inlet Mach number and Mach number of the fluid flowing on the ramped surface of the ramp when the ramp angle of the ramped surface of the ramp is 10 degrees.

As seen from FIG. 2, the boundary layer delamination of the fluid flowing on the ramped surface of the ramp from the ramped surface does not occur when the inlet Mach number is from about 1 to about 3.6 in case of the ramp angle of the ramp of 10.0 degrees. However, the boundary layer delamination of the fluid flowing on the ramped surface of the ramp from the ramped surface occurs when the inlet Mach number is from 1 to 4 (especially, when the inlet Mach number is from 2 to 3) in case of the ramp angle equal to or more than 13.5 degrees. When the boundary layer delamination occurs, there is a fear that the flow speed of mainstream air becomes subsonic. Also, there is a fear that the engine becomes an unstart state (the state that the combustion pressure propagates to the inlet so that the inflow of air into the combustor is obstructed). For these reasons, in the jet engine in which the air flows in a supersonic speed in at least a part of the jet engine, it was technical common sense that the ramp angle of the ramped surface of the ramp is made smaller than 13.5 degrees (especially, the ramp angle below 10 degrees).

On the other hand, the inventors found that the subsonic flow speed of mainstream air and the unstart state of the engine did not occur under a specific condition, even if the ramp angle of the ramped surface of the ramp was made equal to or more than 13.5 degrees. Also, they found that by setting the ramp angle of the ramped surface of the ramp to be equal to or more than 13.5 degrees, the mixing of fuel and mainstream air was promoted in the supersonic combustor, and the stable flame maintenance was realized behind the ramp.

Therefore, one object of the present invention is to provide a jet engine and a flying object, in which the mixing of fuel and air is promoted by making the ramp angle of a ramped surface of a ramp large and stable flame maintenance behind the ramp is made possible.

The object and other objects and profit of this invention could be confirmed easily from the following description and the attached drawings.

The jet engine according to the invention includes the features of claim 1 comprising an inlet from which air is taken in; and a combustor having a fuel injection opening disposed to inject fuel, and configured to combust the fuel injected from the fuel injection opening by using the air. The combustor has a wall section prescribing an air flow path through which air passes. The wall section has a ramp section having a ramped surface, and a first wall surface as a wall surface extending from an end on a front side of the ramped surface. The ramp section is provided with the fuel injection opening.

A ramp angle of the ramped surface of the ramp section to the first wall surface is equal to or more than 13.5 degrees. When a direction perpendicular to the first wall surface and heading for the air flow path from the first wall surface is defined as a first direction, a height of the ramp section protruding from the first wall surface in the first direction is equal to or less than 1/5 of a height along the first direction at an entrance of the combustor.

In the jet engine, the fuel injection opening may be provided for a ramp section rear wall surface as a rear wall surface of the ramp section.

In the jet engine, the wall section may have a second wall surface extending from the ramp section rear wall surface. The second wall surface may be located in a second direction opposite to the first direction from the first wall surface. The wall section may have a second ramped surface provided on a side area of the ramp section and ramped in the second direction as heading for a rear side.

In the jet engine, the combustor may have a flame stabilizer in a rear direction from the second wall surface.

The jet engine may have a plurality of ramp sections which contains the ramp section. The plurality of ramp sections may be arranged along a third direction perpendicular to a longitudinal direction of the air flow path to have a distance equal to or more than 25 mm.

The flying object in some embodiments has the jet engine shown in either of the above-mentioned paragraphs.

According to the present invention, a jet engine and a flying object are provided, in which the mixing of fuel and air is promoted by making the ramp angle of a ramped surface of a ramp large and stable flame maintenance behind the ramp is made possible.

### Brief Description of the Drawings

FIG. 1 is a cross sectional view schematically showing a configuration example of a jet engine.
FIG. 2 is a graph showing a relation between an inlet Mach number and a delamination Mach number.
FIG. 3 is a perspective view showing a configuration example of a flying object according to an embodiment.
FIG. 4A is a cross sectional view schematically showing a configuration example of a jet engine according to the embodiment.
FIG. 4B is a cross sectional view along an A-A plane in FIG. 4A.
FIG. 4C is an enlarged view showing a part of a combustor in FIG. 4A.
FIG. 5A is a cross sectional view schematically showing the configuration example of the jet engine according to the embodiment.
FIG. 5B is an enlarged view showing a part of the combustor in FIG. 5A.
FIG. 5C is a perspective view schematically showing a neighborhood of a ramp section and a flame stabilizer.
FIG. 5D is a cross-sectional view along a B-B plane in FIG. 5B.

### Description of the Embodiments

Hereinafter, a jet engine according to an embodiment will be described with reference to the attached drawings. Here, an example in which the jet engine is applied to a flying object will be described.

### (Definition of directions)

An upstream side in an air flow introduced into the jet engine from an inlet, i.e. an inlet side of the jet engine is defined as "an upstream side" or "a front side". Also, a downstream side in the air flow introduced into the jet engine from the inlet, i.e. a nozzle side of the jet engine is defined as "a downstream side" or "a rear side". Also, when it is supposed that the jet engine is in a horizontal state, a direction orthogonal to a longitudinal direction of a combustor and orthogonal to a vertical direction is defined as "a span direction".

### (Overview of configuration of flying object)

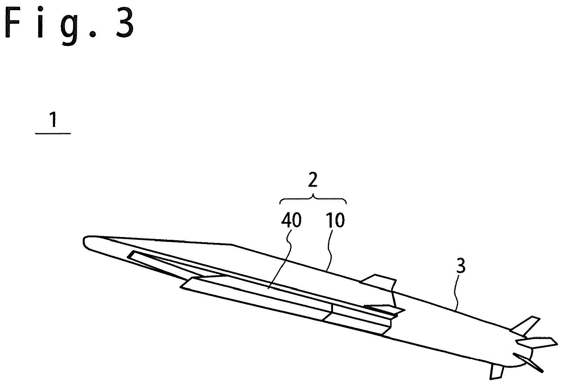

A configuration of a flying object 1 according to an embodiment will be described. FIG. 3 is a perspective view showing an example of the configuration of the flying object 1 according to the embodiment. The flying object 1 includes a jet engine 2 and a rocket motor 3. When the flying object 1 is launched from a launcher, the rocket motor 3 accelerates the flying object 1 from an initial speed at flight start to a desired speed. However, the speed at the flight start is zero when the flying object 1 is launched from the launcher in a stationary state. Also, the speed at the flight start is a moving speed of a moving vehicle or a flight speed of a flight body when the flying object is launched from a launcher of the moving vehicle or flight body in the traveling or flight. After the rocket motor 3 is separated from the flying object 1, the jet engine 2 accelerates the flying object 1 more so as to fly for a target. The jet engine 2 has a fuselage 10 and a cowl 40. The fuselage 10 and the cowl 40 configure an inlet, combustor and nozzle of the jet engine 2, as described later. The jet engine 2 introduces air into the inlet from a front portion, mixes and combusts the air and fuel in the combustor, and expands a combustion gas in the nozzle and expels it backwardly. Thus, the jet engine 2 can get propulsion.

### (Jet engine in first embodiment)

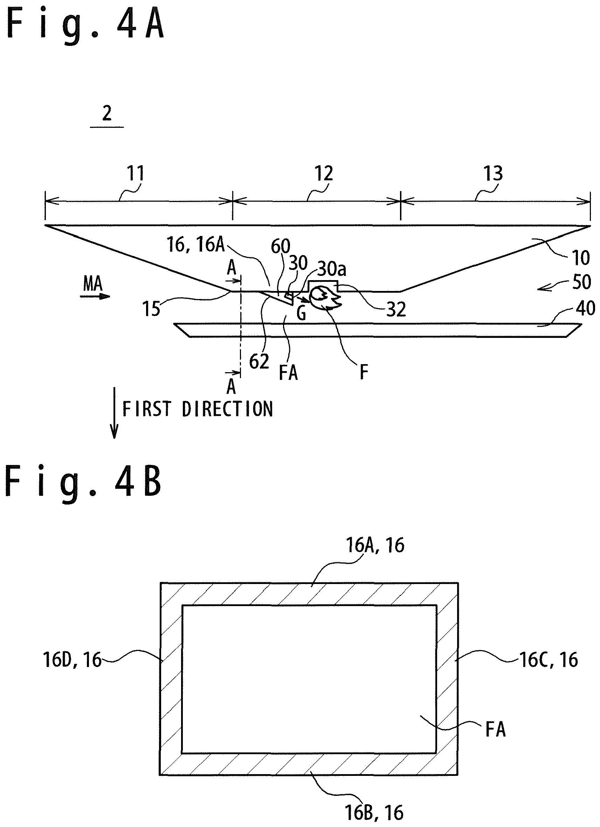

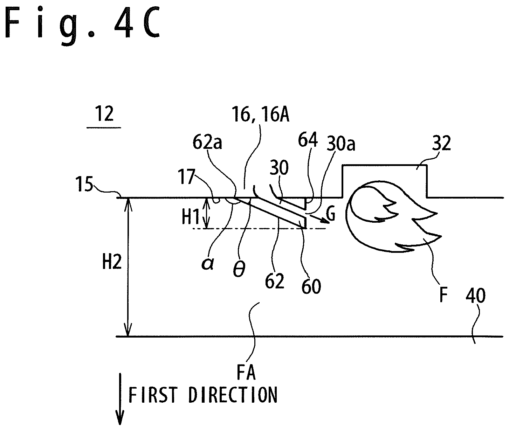

Next, the jet engine according to a first embodiment will be described with reference to FIG. 4A to FIG. 4C. FIG. 4A is a cross sectional view (a longitudinal cross sectional view) schematically showing a configuration example of the jet engine according to the first embodiment. FIG. 4B is a cross sectional view along the A-A plane in FIG. 4A. FIG. 4C is an enlarged view of a part of the combustor 12 in FIG. 4A.

Referring to FIG. 4A, the jet engine 2 has a fuselage 10 and a cowl 40 provided below the fuselage 10 to form a space 50 through which a gas can flow. A front lower part of the fuselage 10 and a front part of the cowl 40 configures an inlet 11 to introduce the air into the space 50. A middle lower part of the fuselage 10 and a middle part of the cowl 40 configure the combustor 12 to mix and combust the fuel and the air. A rear lower part of the fuselage 10 and a rear part of the cowl 40 configure the nozzle 13 to expand and expel the combustion gas.

Alternatively, for example, the jet engine 2 may be configured by a tubular member such as a circular cylindrical member, and the tubular member (the jet engine 2) may be attached to the lower part of the fuselage 10. In this case, a front part of the tubular member configures the inlet 11, the middle part of the tubular member configures the combustor 12, and the rear part of the tubular member configures the nozzle 13.

### (Configuration of combustor)

The combustor 12 has a passage through which a gas (an air, a mixed gas of air and fuel, or a combustion gas) flows. The passage through which the gas flows is surrounded by combustor wall sections 16. Note that in this Description, a passage through which the air flows, of passages through which the gas flows, that is, a passage on the upstream side than a fuel injector 30 is called an air passage FA. In an example shown in FIG. 4B, the air passage FA is a rectangular passage surrounded by the four combustor wall sections 16A to 16D. In the example shown in FIG. 4B, the wall section 16A is a top wall section provided for the fuselage 10, the wall section 16B is a bottom wall section which configures a part of the cowl 40, and the wall section 16C and the wall section 16D are side wall sections which configure a part of the cowl. Note that the shape of the air passage FA (that is, the shape of the combustor wall sections 16) is not limited to the example shown in FIG. 4A and FIG. 4B.

The combustor 12 has the fuel injector 30 having a fuel injection opening 30a. Also, the combustor 12 may have a flame stabilizer 32. When the combustor 12 has the flame stabilizer 32, the fuel injector 30 is arranged on the upstream side than the flame stabilizer 32. That is, the fuel injector 30 is arranged between the rear end 15 of the inlet (for example, a point where the decrease of the cross section of the air passage ends, when the air passage is viewed in the direction of air flow in the jet engine) and the flame stabilizer 32. For example, the flame stabilizer 32 is a concave section provided for the wall section 16A.

As shown in FIG. 4C, the combustor 12 has a ramp section 60 having a ramped surface 62 and a first wall surface 17 which is a wall surface extending from an end of the ramped surface 62 on the front side (a boundary 62a in the front of the ramped surface 62). The ramp section 60 is provided for a combustor wall section 16 (a wall section 16A). The ramp section 60 contains a portion with the prominence of a prominent section into the air flow path FA increasing for a rear side (a downstream side), and the surface of the prominent section is the ramped surface 62. The material of the ramp section 60 may be the same as the material of the combustor wall section 16 or may be different. Note that it is desirable that the combustor 12 has a plurality of the ramp sections 60 along a direction perpendicular to the longitudinal direction of the air flow path FA (e.g. the span direction).

As shown in FIG. 4C, a ramp angle θ of the ramped surface 62 of the ramp section 60 is from 13.5 degrees to 30 degrees, and desirably, the ramp angle is from 18 degrees to 30 degrees. Note that the ramp angle θ is an angle of the ramped surface 62 to the first wall surface 17. In other words, the ramp angle θ is a supplementary angle of an angle α between the ramped surface 62 and the first wall surface 17 which is located on the directly upstream side of the ramped surface 62 of the combustor wall surface. Note that in an example shown in FIG. 4C, the first wall surface 17 is a flat plane. Also, in the example shown in FIG. 4C, the ramped surface 62 is a flat plane.

The prominence height H1 of the ramp section 60 is equal to or less than 1/5 of the height H2 of the entrance of the combustor. From results of numerical calculation and a combustion examination, it is confirmed that an unstart state of the engine does not occur and the flame F is effectively maintained in the rear direction from the ramp section, when the height H1 of the ramp section 60 is set to be equal to or less than 1/5 of the height H2 of the entrance of the combustor. Especially, it is confirmed that even if Mach number at the entrance of the combustor is equal to or more than 2 and less than or equal to 3, the unstart state of the engine does not occur, and the flame F is effectively maintained in the rear portion from the ramp section. Note that the height H1 of the ramp section 60 is a height into a first direction from the first wall surface 17 when a direction perpendicular to the combustor wall surface (more specifically, the first wall surface 17) and heading for the air flow path FA from the first wall surface 17 is defined as the "first direction". Also, the height H2 of the entrance of the combustor is a height of the air flow path FA in the first direction at the rear end 15 of the inlet.

The fuel injection opening 30a injecting the fuel G is arranged in the ramp section 60. The ramp section 60 receives aerodynamic heating due to the air flowing through the air flow path FA and is heated. Because the fuel passage is provided inside the ramp section 60 to supply the fuel to the fuel injection opening 30a, the ramp section 60 is cooled by the fuel. As a result, the temperature rise of the ramp section 60 is restrained. Note that in an example shown in FIG. 4C, the fuel injection opening 30a is provided for a rear wall surface 64 of the ramp section 60.

The combustor of the jet engine in the embodiment has the ramp section, and the ramp angle of the ramped surface of the ramp section is equal to or more than 13.5 degrees and less than or equal to 30 degrees. Also, the height of the ramp section is equal to or less than 1/5 of the height of the entrance of the combustor. Therefore, it is restrained that the flow speed of mainstream air becomes subsonic or the engine is set to the unstart state. Also, the ramp angle of the ramped surface of the ramp section is equal to or more than 13.5 degrees that overrules the technical common sense. In other words, in the combustor of the jet engine in the embodiment, the deflection angle of mainstream air by the ramp section is larger than the delamination limit angle of the laminar flow. Therefore, the mainstream air is largely compressed beyond a strong shock wave, the strong vertical vortex occurs around the ramp section 60. For these reasons, the mixing of mainstream air and fuel is effectively promoted. Note that the generation mechanism of vertical vertexes will be described in detail in the following second embodiment.

### (Jet engine in second embodiment)

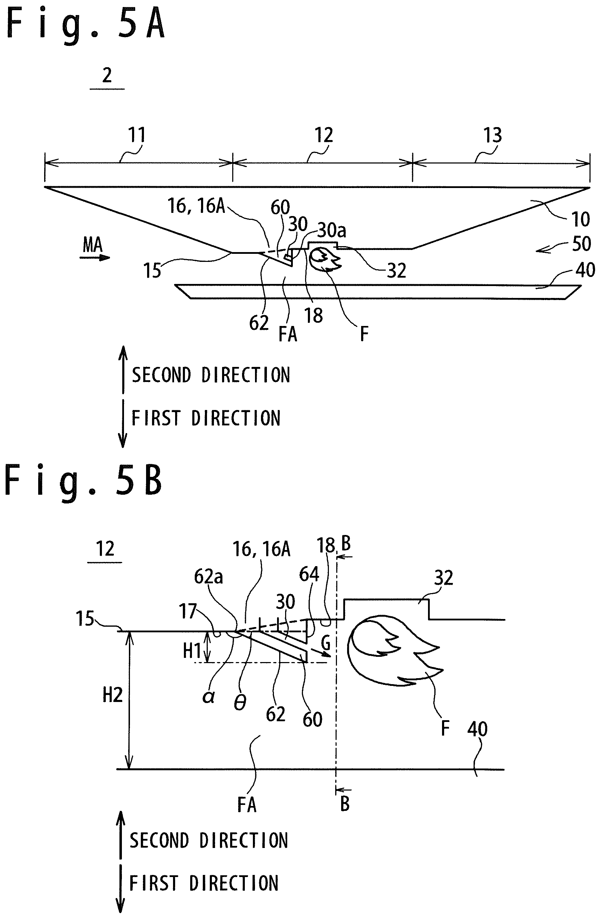

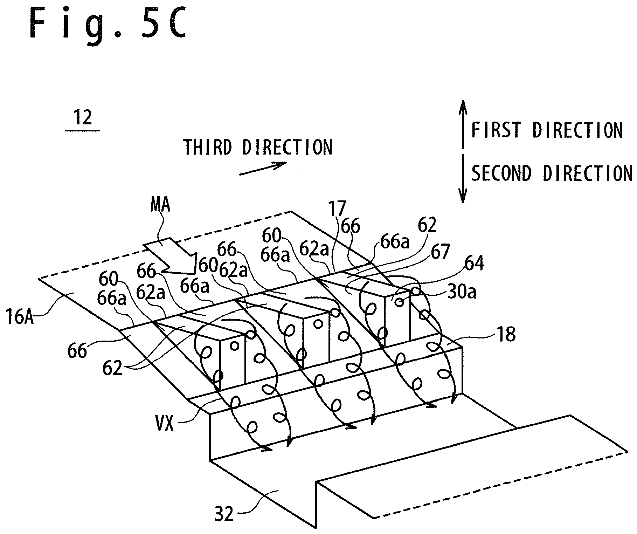

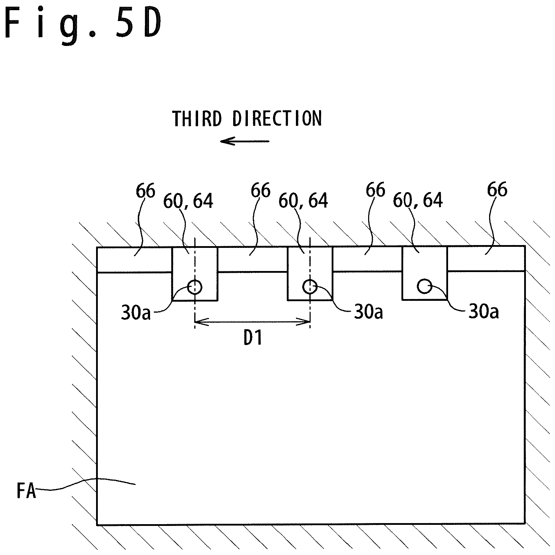

Referring to FIG. 5A to FIG. 5D, the jet engine according to a second embodiment will be described. FIG. 5A is a cross sectional view (the longitudinal cross sectional view) schematically showing a configuration example of the jet engine according to the second embodiment. FIG. 5B is an enlarged view of the combustor 12 shown in FIG. 5A. FIG. 5C is a perspective view schematically showing the ramp section 60 and the flame stabilizer 32. FIG. 5D is a diagram (a B-B plane) when the combustor 12 is viewed in the direction shown by the arrows B in FIG. 5B. Note that in the jet engine 2 of the second embodiment, the component having the same function as the component of the jet engine of the first embodiment is assigned with the same reference numeral and the repetitive explanation is omitted.

In an example shown in FIG. 5A and FIG. 5B, the combustor wall section 16 has a second wall surface 18 extending from a rear wall surface 64 of the ramp section. The second wall surface 18 is located in a second direction opposite to the first direction from the first wall surface 17. That is, the second wall surface 18 is arranged to retreat in the second direction from the first wall surface 17. Note that the second wall surface 18 is arranged between the ramp section 60 and the flame stabilizer 32. Also, in the example shown in FIG. 5B, the second wall surface 18 has a flat surface. Also, the flame stabilizer 32 is a concave section having a recess in the second direction from the second wall surface 18. As shown in FIG. 5C, the flame stabilizer 32 (the concave section) may be formed over the whole of combustor 12 in the span direction. Alternatively, the flame stabilizer 32 (the concave section) may be formed over a part of the combustor 12 in the span direction.

As shown in FIG. 5C, the combustor 12 has a plurality of the ramp sections 60 along a third direction (e.g. the span direction) which is perpendicular to the first direction. The number of ramp sections arranged along the third direction is optional. A ramped surface 62 is provided for each of the ramp sections 60. A shock wave is generated on the ramped surface 62 (more specifically, in the boundary 62a between the first wall surface 17 and the ramped surface 62). Because the air which passes through the shock wave is compressed, the static pressure of the air flowing on the ramped surface 62 is higher than the static pressure of the air flowing on the first wall surface 17. Also, the ramped surface 66 is provided for each side area of each ramp section 60. In an example shown in FIG. 5C, the ramped surface 66 is provided among two adjacent ramp sections 60. The ramped surface 66 is a surface (a second ramped surface) ramped or inclined in the second direction on the rear side (on a downstream side). In other words, the ramped surface 66 is a surface which recedes from the air flow path FA in the second direction as heading for the rear side. An expansion wave is generated on the ramped surface 66 (more specifically, in a boundary 66a between the ramped surface 66 and the first wall surface 17 located on the directly upstream side from the ramped surface 66). Because the air which passes through the expansion wave is made to expand, the static pressure of the air flowing on the ramped surface 66 is lower than the static pressure of the air flowing on the first wall surface 17 located on the directly upstream side than the ramped surface 66. Note that in the example shown in FIG. 5C, the ramped surface 66 is a flat plane.

In the example shown in FIG. 5C, the combustor 12 has the ramped surface 62 and the ramped surface 66 (the second ramped surface). Because the pressure of air on the ramped surface 62 is higher than the pressure of air on the ramped surface 66, the flow of air is generated for the ramped surface 66 from the ramped surface 62. The flow of air enhances the vertical vortexes VX. In the example shown in FIG. 5C, the mixing of fuel G and mainstream air MA is more promoted by the enhanced vertical vortexes VX. It is theoretically verified that the reaction time until the fuel G reaches the combustion becomes short because the mixing of fuel G and mainstream air MA is promoted. Thus, the stabilization of flame maintenance is improved. Also, the fuel G is led to the flame stabilizer 32 by arranging the flame stabilizer 32 in a position where the fuel G is carried in the second direction by the vertical vortexes VX. Thus, the stabilization of flame maintenance is improved. Note that in the example shown in FIG. 5C, the fuel injection opening 30a is arranged on a rear wall surface 64 of the ramp section.

Note that the side wall surface 67 of the ramp section may be a surface perpendicular to the ramped surface 66. Also, the rear wall surface 64 of the ramp section may be a surface perpendicular to the second wall surface 18. Also, in the example shown in FIG. 5C, one fuel injection opening 30a is arranged for each ramp section 60. However, alternatively, a plurality of fuel injection openings 30a may be arranged for each ramp section 60.

Referring to FIG. 5D, it is desirable that a distance D1 between two adjacent ramp sections is set in such a manner that two vertical vortexes can pass between the two ramp sections. More specifically, the distance D1 between the two adjacent ramp sections is equal to or more than, for example, 25 mm (more specifically, for example, it is equal to or more than 25 mm and less than or equal to 35 mm). Note that the distance D1 is a distance between the centers of the two adjacent ramp sections along a third direction (e.g. the span direction) which is perpendicular to the longitudinal direction of the air flow path (more specifically, a distance between a center of one ramp section along the third direction and a center of another ramp section along the third direction span).

The second embodiment attains the same effect as in the first embodiment. In addition, in the second embodiment, the second ramped surfaces are provided for the sides of the ramp section to generate an expansion wave. Therefore, the vertical vortexes generated by the ramp section are enhanced so that the mixing of fuel and air is more promoted.

### (Method of operating jet engine in embodiment)

Regarding the jet engine in the above-mentioned embodiments, an example of the operating method will be described. At a first step, a jet engine 2 (or a flying object 1 having the jet engine) is accelerated to fly in the speed equal to or more than Mach 2. The acceleration may be carried out by the rocket motor 3 or through the acceleration of a flight body with the jet engine 2 loaded (or the flying object 1 having the jet engine 2). At a second step, the ignition of the fuel injected from the fuel injection opening 30a is carried out. The ignition may be carried out by the known igniter. At a third step, because the mixed gas of air introduced from the inlet and fuel injected from the fuel injection opening 30a is combusted, combustion gas is formed. The flame produced through the combustion is maintained by the flame stabilizer 32. Also, combustion gas is expelled from the nozzle 14 to the rear direction. The jet engine 2 is accelerated more by the reaction which accompanies the expelling of combustion gas.

The present invention is not limited to each of the above embodiments. It is apparent that each embodiment can be changed or modified appropriately in the scope of the claims. Also, unless any technical contradiction is not caused, various techniques used in each embodiment can be applied to another embodiment.

## Claims

1. A jet engine (2) comprising:
an inlet (11) from which air is introduced in operation; and
a combustor (12) having a fuel injection opening (30a) disposed to inject fuel, and configured to combust the fuel injected from the fuel injection opening (30a) by using the air introduced from the inlet (11),
wherein the combustor (12) has a wall section (16) defining an air flow path (FA) through which the air passes in operation,
wherein the wall section (16) has a ramp section (60) with a ramped surface (62), and a first wall surface (17) as a wall surface extending from an end of the ramped surface (62) on a front side,
wherein the ramp section (60) is provided with the fuel injection opening (30a),
**characterized in that**
a ramp angle (Θ) of the ramped surface (62) of the ramp section (60) to the first wall surface (17) is equal to or more than 13.5 degrees, and,
when a direction perpendicular to the first wall surface (17) and heading for the air flow path (FA) from the first wall surface (17) is defined as a first direction, a height (H1) of the ramp section (60) protruding from the first wall surface (17) to the first direction is equal to or less than 1/5 of a height (H2) along the first direction of an entrance of the combustor (12).

2. The jet engine (2) according to claim 1, wherein the fuel injection opening (30a) is provided for a rear wall surface (64) of the ramp section (60).

3. The jet engine (2) according to claim 2, wherein the wall section (16) has a second wall surface (18) extending from the rear wall surface (64) of the ramp section (60),
wherein the second wall surface (18) is provided in a second direction opposite to the first direction from the first wall surface (17), and
wherein the wall section (16) has a second ramped surface (66) provided on a side area of the ramp section (60) and ramped in the second direction as heading for a rear side.

4. The jet engine (2) according to claim 3, wherein the combustor (12) has a flame stabilizer (32) on a rear side of the second wall surface (18).

5. The jet engine (2) according to any one of claims 1 to 4, wherein the ramp section (60) comprises a plurality of ramp sections (60),
wherein the plurality of ramp sections (60) are arranged along a third direction perpendicular to a longitudinal direction of the air flow path (FA) to have an interval (D1) equal to or more than 25 mm.

6. A flying object (1) comprising the jet engine (2) according to any one of claims 1 to 5.

## Patentansprüche

1. Ein Strahltriebwerk (2) mit:
einem Einlass (11), von dem Luft im Betrieb eingebracht wird, und
einer Brennkammer (12) mit einer Kraftstoffeinspritzöffnung (30a), die angeordnet ist, um Kraftstoff einzuspritzen, und die konfiguriert ist, um den von der Kraftstoffeinspritzöffnung (30a) eingespritzten Kraftstoff unter Verwendung der von dem Einlass (11) eingebrachten Luft zu verbrennen,
wobei die Brennkammer (12) einen Wandabschnitt (16) aufweist, der einen Luftströmungsweg (FA) definiert, durch den die Luft im Betrieb passiert,
wobei der Wandabschnitt (16) einen Rampenabschnitt (60) mit einer Rampenoberfläche (62) und eine erste Wandoberfläche (17) als eine Wandoberfläche, die sich von einem Ende der Rampenoberfläche (62) an einer Vorderseite erstreckt, besitzt,
wobei der Rampenabschnitt (60) mit der Kraftstoffeinspritzöffnung (30a) versehen ist,
**dadurch gekennzeichnet, dass**
ein Rampenwinkel (θ) der Rampenoberfläche (62) des Rampenabschnitts (60) zu der ersten Wandoberfläche (17) gleich oder größer als 13,5 Grad ist, und
wenn eine Richtung senkrecht zu der ersten Wandoberfläche (17) und hinlaufend zu dem Luftströmungsweg (FA) von der ersten Wandoberfläche (17) als eine erste Richtung definiert ist, eine Höhe (H1) des Rampenabschnitts (60), der von der ersten Wandoberfläche (17) zu der ersten Richtung vorsteht, gleich oder geringer als 1/5 einer Höhe (H2) entlang der ersten Richtung eines Eingangs der Brennkammer (12) ist.

2. Das Strahltriebwerk (2) gemäß Anspruch 1, wobei die Kraftstoffeinspritzöffnung (30a) für eine hintere Wandoberfläche (64) des Rampenabschnitts (60) vorgesehen ist.

3. Das Strahltriebwerk (2) gemäß Anspruch 2, wobei der Wandabschnitt (16) eine zweite Wandoberfläche (18) besitzt, die sich von der hinteren Wandoberfläche (64) des Rampenabschnitts (60) erstreckt.
wobei die zweite Wandoberfläche (18) in einer zweiten Richtung entgegengesetzt zu der ersten Richtung von der ersten Wandoberfläche (17) vorgesehen ist, und
wobei der Wandabschnitt (16) eine zweite Rampenoberfläche (66) besitzt, die an einem Seitenbereich des Rampenabschnitts (60) vorgesehen ist und die in der zweiten Richtung im Verlauf zu einer hinteren Seite rampenförmig ist.

4. Das Strahltriebwerk (2) gemäß Anspruch 3, wobei die Brennkammer (12) einen Flammenstabilisator (32) an einer hinteren Seite der zweiten Wandoberfläche (18) besitzt.

5. Das Strahltriebwerk (2) gemäß einem der Ansprüche 1 bis 4, wobei der Rampenabschnitt (60) eine Vielzahl von Rampenabschnitten (60) aufweist,
wobei die Vielzahl von Rampenabschnitten (60) entlang einer dritten Richtung senkrecht zu einer Längsrichtung des Luftströmungswegs (FA) so angeordnet sind, dass sie einen Abstand (D1) gleich oder mehr als 25mm haben.

6. Ein Flugkörper (1) mit dem Strahltriebwerk (2) gemäß einem der Ansprüche 1 bis 5.

## Revendications

1. Moteur (2) à réaction, comprenant :
une entrée (11), par laquelle de l'air est introduit en fonctionnement ; et
une chambre de combustion (12), ayant une ouverture (30a) d'injection de combustible disposée de manière à injecter du combustible, et configurée pour faire brûler le combustible injecté par l'ouverture (30a) d'injection de combustible en utilisant l'air introduit par l'entrée (11),
dans lequel la chambre de combustion (12) a une partie (16) de paroi définissant un trajet (FA) d'écoulement d'air, dans lequel l'air passe en fonctionnement,
dans lequel la partie (16) de paroi a une partie (60) en rampe ayant une surface (62) en rampe et une première surface (17) de paroi, comme surface de paroi s'étendant à partir d'une extrémité de la surface (62) en rampe d'un côté avant,
dans lequel la partie (60) en rampe est pourvue de l'ouverture (30a) d'injection de combustible,
**caractérisé en ce qu'**
un angle (θ) de rampe de la surface (62) en rampe de la partie (60) en rampe avec la première surface (17) de paroi est supérieur ou égal à 13,5 degrés, et,
lorsque l'on définit, comme étant une première direction, une direction perpendiculaire à la première surface (17) de paroi et partant pour le trajet (FA) d'écoulement d'air de la première surface (17) de paroi, une hauteur (H1) de la partie (60) en rampe faisant saillie de la première surface (17) de paroi dans la première direction est inférieure ou égale au 1/5 d'une hauteur (H2) suivant la première direction d'une entrée de la chambre de combustion (12).

2. Moteur (2) à réaction suivant la revendication 1, dans lequel l'ouverture (30a) d'injection de combustible est prévue à une surface (64) de paroi arrière de la partie (60) en rampe.

3. Moteur (2) à réaction suivant la revendication 2, dans lequel la partie (16) de paroi a une deuxième surface (18) de paroi s'étendant à partir de la surface (64) de paroi arrière de la partie (60) en rampe,
dans lequel la deuxième surface (18) de paroi est prévue dans une deuxième direction contraire à la première direction, à partir de la première surface (17) de paroi, et
dans lequel la partie (16) de paroi a une deuxième surface (66) en rampe prévue sur une région latérale de la partie (60) en rampe et en rampe dans la deuxième direction, en allant vers un côté arrière.

4. Moteur (2) à réaction suivant la revendication 3, dans lequel la chambre de combustion (12) a un stabilisateur (32) de flamme d'un côté arrière de la deuxième surface (18) de paroi.

5. Moteur (2) à réaction suivant l'une quelconque des revendications 1 à 4, dans lequel la partie (60) en rampe comprend une pluralité de parties (60) en rampe,
dans lequel la pluralité de parties (60) en rampe sont disposées suivant une troisième direction perpendiculaire à une direction longitudinale du trajet (FA) d'écoulement d'air, de manière à avoir un intervalle (D1) supérieur ou égal à 25 mm.

6. Objet (1) volant comprenant le moteur (2) à réaction suivant l'une quelconque des revendications 1 à 5.
